# EUROPÄISCHE PATENTANMELDUNG

(11) **EP 3 138 669 A2**
(43) Veröffentlichungstag der Anmeldung: **08.03.2017**
(21) Anmeldenummer: 16175443.7
(22) Anmeldetag: 21.06.2016
(51) Int. Cl.: B25J 15/00

(54) **GREIFER UND VERFAHREN ZUR HERSTELLUNG EINES GREIFERS**

(30) Priorität: 01.09.2015 DE 102015114556
(71) Anmelder: Röhm GmbH, 89567 Sontheim (DE)
(72) Erfinder: Gräßle, Jens, 89522 Heidenheim (DE); Schweigert, Eduard, 89428 Syrgenstein (DE)
(74) Vertreter: Hentrich Patentanwälte PartG mbB

(57) **Zusammenfassung**

Die Erfindung betrifft einen Greifer mit zwei Seitenflanken (2, 3), die einenends mittelbar oder unmittelbar miteinander verbunden sind und zwischen sich einen ein Betätigungsmittel (6) beinhaltenden Raum aufspannen, dessen seitliche Begrenzungen zumindest eine von außen zugängliche Öffnung (10) aufweisen. Mindestens eine über die Öffnung (10) verlaufende Lamelle (11) unterteilt die Öffnung (10) derart, dass die sich durch die Lamelle (11) ergebenden Teilflächen die Zugänglichkeit einschränken oder unterbinden. Die Erfindung betrifft weiterhin ein Verfahren zur Herstellung eines Greifers.

## Beschreibung

Die Erfindung betrifft einen Greifer mit zwei Seitenflanken, die einenends mittelbar oder unmittelbar miteinander verbunden sind und zwischen sich einen ein Betätigungsmittel beinhaltenden Raum aufspannen, dessen seitliche Begrenzungen zumindest eine von außen zugängliche Öffnung aufweisen. Die Erfindung betrifft weiterhin ein Verfahren zur Herstellung eines Greifers.

Greifer der eingangs genannten Art sind aus dem Stand der Technik wohl bekannt und werden von der Anmelderin beispielsweise unter der Bezeichnung RRMG angeboten. Diese Greifer dienen insbesondere dazu, ein Werkstück zu ergreifen und dessen Lage relativ zu einer Bearbeitungs- oder Transporteinrichtung zu verändern. Eingesetzt werden diese Greifer auch, um einen Gegenstand festzuhalten, weil beispielsweise auf ein Gewinde ein Verschluss aufgeschraubt werden soll. Derartige Greifer haben sich in der Praxis bewährt, so dass sich deren Einsatzgebiete kontinuierlich ausgeweitet haben und derartige Greifer auch als Teil von Roboteranlagen aufgefasst werden, bezüglich denen bestimmte sicherheitsrelevante Aspekte zu beachten sind, damit während des Einsatzes des Roboters bzw. für dessen Vorbereitung keine Gefährdungen des Bedienpersonal zu befürchten sind.

Der vorliegenden Erfindung liegt daher die Aufgabe zugrunde, bei einem Greifer der eingangs genannten Art das Verletzungsrisiko für das Bedienpersonal zu senken. Aufgabe der Erfindung ist es weiterhin, ein Verfahren zur Herstellung eines Greifers anzugeben.

Der die Vorrichtung betreffende Teil der Aufgabe wird bei einem Greifer der eingangs genannten Art dadurch gelöst, dass mindestens eine über die Öffnung verlaufende Lamelle die Öffnung derart unterteilt, dass die sich durch die Lamelle ergebenden Teilflächen die Zugänglichkeit einschränken oder unterbinden.

Das Betätigungsmittel dient dazu, den Greifer zwischen zwei Betriebszuständen zu verstellen, nämlich zwischen der geöffneten Konfiguration, bei der das zu ergreifende Werkstück zwischen den freien Enden der Seitenflanken positioniert wird, und der geschlossenen Konfiguration, bei der das Werkstück ergriffen ist. Zur Verstellung zwischen den beiden Konfigurationen dient das Betätigungsmittel, das insbesondere als Druckmittel betätigter Zylinder realisiert sein kann. Für die Verstellung der Konfiguration des Greifers führt auch das Betätigungsmittel eine Bewegung aus, so dass eine Gefährdung des Bedienpersonals sich durch die Bewegung des Betätigungsmittels und die daraus resultierende Verstellung der Seitenflanken ergibt, insbesondere wenn das Bedienpersonal, versehentlich oder vorsätzlich, in die von außen zugängliche Öffnung greift. Dies wird durch die erfindungsgemäße vorgesehene Lamelle erschwert oder sogar verhindert, da die Lamelle einen Anschlag bzw. Hindernis für das Eindringen insbesondere eines Fingers darstellt.

Im Rahmen der Erfindung besonders vorgesehen ist es, wenn zwischen den Seitenflanken mit Abstand zu deren freien Enden eine das Betätigungsmittel tragende Tragplatte vorgesehen ist. Diese Tragplatte begrenzt zusammen mit den zwei Seitenflanken eine von außen zugängliche Öffnung, zu der aber zusätzliche Öffnungen an den freien Enden der Seitenflanken vorliegen können. Insbesondere die das Betätigungsmittel enthaltende Öffnung, begrenzt von der Tragplatte und den Seitenflanken, gilt es zu sichern, so dass angesichts der Größe dieser Öffnung mehrere Lamellen erforderlich sein können, um die von außen zugängliche Öffnung so zu unterteilen, dass der gewünschte Effekt der Erschwerung der Zugänglichkeit sich ergibt.

Ganz besondere bevorzugt im Rahmen der Erfindung ist es auch, wenn die mindestens eine Lamelle quer zur Richtung ihrer Längserstreckung ausgebildet und mindestens eine Delle aufweist.

Die sich über die von außen zugängliche Öffnung erstreckende Lamelle kann als eine Saite bzw. Membran aufgefasst werden, die quer zur Richtung ihrer Längserstreckung ohne Kraftaufwand ausgelenkt werden kann, so dass diesbezüglich der Verstellung des Greifers zwischen seinen Konfigurationen kein Widerstand entgegengesetzt wird. Es ist aber auch möglich, dass die Verstellung des Greifers eine Kraftwirkung auf die Lamelle in ihrer Längserstreckung erfordert. Damit die Lamelle in diesem Zusammenhang nicht als Versteifungsstrebe fungiert, ist die Delle vorgesehen, die eine Nachgiebigkeit der Lamelle bewirkt und insbesondere auch als ein Scharnier oder scharnierähnlich federnd wirken kann.

Im Rahmen der Erfindung ist weiterhin vorgesehen, dass die mindestens eine Lamelle eine Wellenform besitzt. Diese Wellenform kann auch komplex gebildet sein und als eine Überlagerung mehrerer Wellen aufgefasst werden.

Diese Wellenform dient wiederum dazu, die Kraft zu minimieren, die die Lamelle der Verstellung des Greifers entgegensetzt.

Bei entsprechend groß gestalteten, von außen zugänglichen Öffnungen ist es bevorzugt, wenn mehrere der Lamellen die Öffnung überbrücken und miteinander durch Querstege zur Bildung einer Gitterstruktur vernetzt sind, da so insbesondere auch vermieden ist, dass bei länger ausgedehnten benachbarten Lamellen diese in entgegengesetzter Richtung ausgelenkt werden können, so dass zwischen den Lamellen wieder ein Freiraum entsteht, durch den ein Finger des Bedienpersonals in den zu schützenden Raum eindringen kann.

Insbesondere ist dabei auch vorgesehen, dass die Größe der Gitterzellen der Gitterstruktur zur Verhinderung des Durchsteckens eines erwachsenen Menschenfingers gewählt ist. Bevorzugt ist es auch, wenn die Gitterzellen der Gitterstruktur elastisch deformierbar sind, also wiederum die Kraft minimiert wird, die aufgrund der Deformation der Gitterstruktur der Verstellung des Greifers zwischen seinen Konfigurationen entgegenwirkt. Es soll also insbesondere vermieden werden, dass nach Art sich kreuzender Gitterstäben eine Versteifung der Öffnung bewirkt wird.

Bewährt hat es sich weiterhin auch, wenn die mindestens eine Lamelle plattenförmig gebildet ist. Hierdurch lässt sich die mechanische Stabilität der Lamelle erhöhen, da diese einen längeren Kontaktbereich mit den Seitenflanken bzw. der Tragplatte oder der Grundplatte aufweisen kann. Dies wirkt sich wiederum positiv auf die Betriebssicherheit des erfindungsgemäßen Greifers aus, da ein versehentliches Eindringen des Bedienpersonals in die Öffnung erst bei einem größeren Kraftaufwand möglich ist.

Als besonders bevorzugt hat es sich hierbei auch erwiesen, wenn die mindestens eine Lamelle mehrfach vorgesehen ist und die einzelnen Lamellen zumindest teilweise gestaffelt angeordnet sind. Durch die Staffelung der Lamellen ist gewährleistet, dass sich die Lamellen relativ zueinander bewegen können, ohne dass es zu einer Behinderung durch benachbarte Platten kommt. In diesem Zusammenhang hat es sich auch bewährt, wenn sich die plattenförmigen Lamellen überlappen, wodurch auf einfache Art und Weise sichergestellt wird, dass die verbleibende Öffnung zwischen den Lamellen minimiert wird.

Der das Verfahren betreffende Teil der Aufgabe wird gelöst durch ein Verfahren zur Herstellung eines Greifers, bei dem die Seitenflanken in einem generativen Fertigungsschritt einstückig mit der mindestens einen Lamelle hergestellt werden. Durch dieses Verfahren wird erreicht, dass auch die Kontaktpunkte zwischen den Seitenflanken und der mindestens einen Lamelle bereits bei der generativen Fertigung ausgebildet werden und somit das Erfordernis umgangen wird, eine nachträglich Montage der mindestens einen Lamelle an den Seitenflanken vorzusehen, da dies einen Schwachpunkt des Greifers darstellen könnte oder zur Vermeidung eines derartigen Schwachpunktes eine Versteifung bewirken könnte. Auch ist es durch den Einsatz des generativen Fertigungsschrittes möglich, die mindestens eine Lamelle oder die Gitterstruktur in einer beliebigen, hoch komplexen Gestaltung der einzelnen Gitterzellen auszuführen, wobei insbesondere die Gitterpunkte als Kreuzungsstellen der Lamellen mit den Querstegen nicht zu einer Versteifung beitragen, sondern im Gegenteil als ein Gelenk die gewünschte Elastizität der Gitterzellen fördern.

Im Folgenden wird die Erfindung an in den Zeichnungen dargestellten Ausführungsbeispielen näher erläutert; es zeigen:

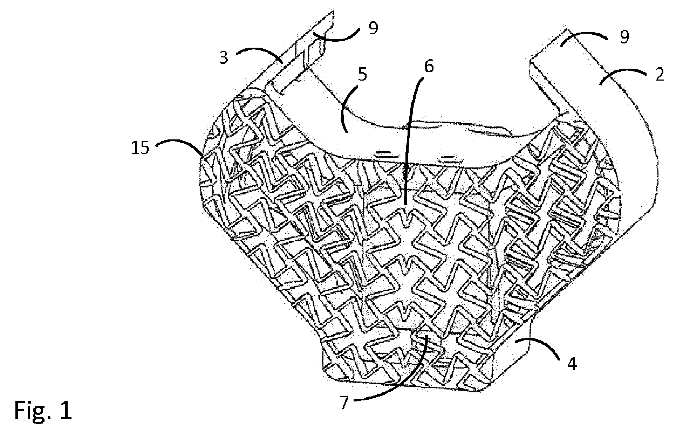

- Fig. 1: eine perspektivische Ansicht einer ersten Ausführungsform eines erfindungsgemäßen Greifers,

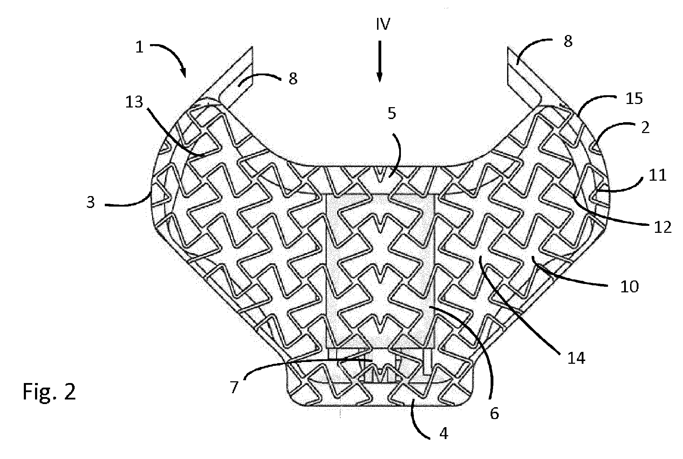

- Fig. 2: eine Vorderansicht des erfindungsgemäßen Greifers aus Figur 1,

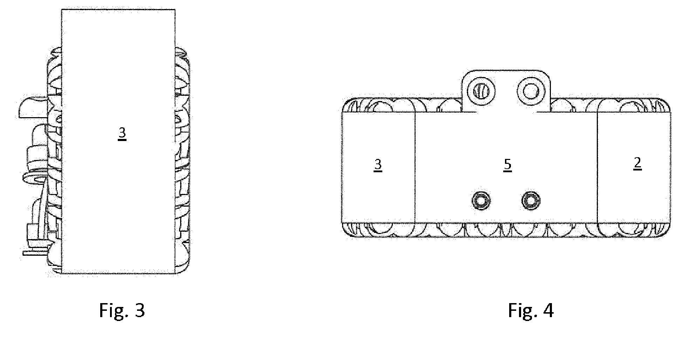

- Fig. 3: eine Seitenansicht der ersten Ausführungsform des erfindungsgemäßen Greifers,
- Fig. 4: eine Ansicht aus Richtung des Pfeils IV aus Figur 2,
- Fig. 5: eine perspektivische Ansicht einer zweiten Ausführungsform eines erfindungsgemäßen Greifers,
- Fig. 6: eine Vorderansicht der zweiten Ausführungsform, und
- Fig. 7: eine Schnittansicht entlang des Schnittes VII-VII aus Figur 6.

In der Zeichnung dargestellt ist ein Greifer 1, der zwei Seitenflanken 2, 3 aufweist, die gebogen ausgeführt sind und einenends durch eine Grundplatte 4 miteinander in Verbindung stehen. Zwischen den Seitenflanken 2, 3 mit Abstand zu deren freien Enden ist eine Tragplatte 5 vorgesehen, auf der ein Betätigungsmittel 6 positioniert ist, das bei dem in der Zeichnung dargestellten Ausführungsbeispiel durch einen druckmittelbetätigten Zylinder gebildet ist. Aus diesem Zylinder ist eine translatorisch verstellbare Zylinderstange 7 herausgeführt und an der Grundplatte 4 befestigt, so dass bei einer Verstellung der Zylinderstange 7 der Greifer 1 verformt wird und mit den als Spannbacken 8 fungierenden freien Enden 9 der Seitenflanken 2, 3 ein Werkstück ergriffen werden kann.

Die Seitenflanken 2, 3 spannen zwischen sich einen Raum auf, in dem das Betätigungsmittel 6 angeordnet ist. Dieser durch die Seitenflanken 2, 3 aufgespannte Raum ist sowohl von vorne als auch von hinten offen, besitzt also zwei von außen zugängliche Öffnungen 10, so dass eine Gefährdung des Bedienpersonals vorliegt, wenn dieses beim Einsatz des Greifers 1 zum Betätigungsmittel 6 greift oder zwischen Betätigungsmittel 6 und Seitenflanken 2, 3 insbesondere ein Finger eingeklemmt wird. Um diese Gefährdung des Bedienpersonals auszuschließen, ist die von außen zugängliche Öffnung 10 durch mindestens eine über die Öffnung 10 verlaufende Lamelle 11 derart unterteilt, dass die sich durch die Lamelle 11 ergebenden Teilflächen der Öffnung 10 die Zugänglichkeit einschränken oder unterbinden. Bei dem in der Zeichnung dargestellten Ausführungsbeispiel ist die Zugänglichkeit wirksam unterbunden, weil die quer zur Richtung ihrer Längserstreckung eine Delle 12 aufweisende Lamelle 11 mehrfach vorgesehen ist und diese Lamellen 11 miteinander durch Querstege 13 zur Bildung einer Gitterstruktur vernetzt sind, wobei die Größe der Gitterzellen 14 der Gitterstruktur dabei wiederum so gewählt ist, dass das Durchstecken eines Fingers eines erwachsenen Menschen verhindert ist.

Da bereits eine einzelne Lamelle 11 mehrere Dellen 12 aufweisen kann, so dass diese Lamelle 11 als wellenförmig bezeichnet werden kann, sind die Gitterzellen 14 der Gitterstruktur elastisch deformierbar, so dass die zusätzliche Anordnung der Gitterstruktur keine der Verstellung des Greifers 1 dessen Gebrauchstüchtigkeit einschränkende Kraft entgegensetzt.

Der in der Zeichnung dargestellte Greifer 1 wird in einem generativen Fertigungsschritt einstückig mit den Seitenflanken 2, 3 und der Gitterstruktur hergestellt, so dass die Kontaktpunkte 15 der Seitenflanken 2, 3 mit den Lamellen 11 bzw. Querstegen 13 unmittelbar bei der Fertigung ausgebildet werden können.

Dabei kann in einer nicht näher dargestellten Ausführungsform das Bestätigungsmittel 6 auf der Tragplatte 5 positioniert werden, bevor der Raum nach außen unzugänglich durch die Grundplatte 4 in dem fortgesetzten Fertigungsschritt verschlossen wird.

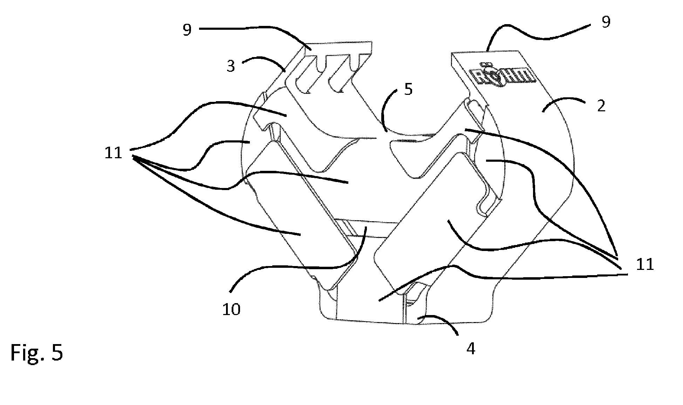

Figur 5 zeigt eine zweite Ausführungsform des erfindungsgemäßen Greifers 1. Hierin sind die Lamellen 11 plattenförmig gebildet und an den Seitenflanken 2 und 3, der Grundplatte 4 sowie der Tragplatte 5 angebracht. Die einzelnen Lamellen 11 sind dabei gestaffelt angeordnet und überlappen sich in weiten Teilen, so dass sich die Zugänglichkeit der Öffnung 10 reduziert.

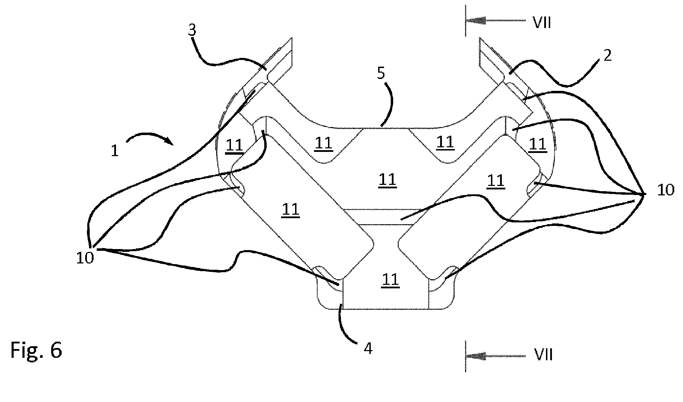

Auch der Figur 6 ist entnehmbar, dass die Zugänglichkeit der Öffnung 10 durch die Verwendung der plattenförmigen Lamellen 11 sehr eingeschränkt ist, so dass auch bei der zweiten Ausführungsform des erfindungsgemäßen Greifers 1 die zwischen den Lamellen 11 verbleibenden Flächen eine Größe aufweisen, die geeignet ist, ein Durchstecken eines Fingers eines Menschen in die Öffnung 10 zu verhindern.

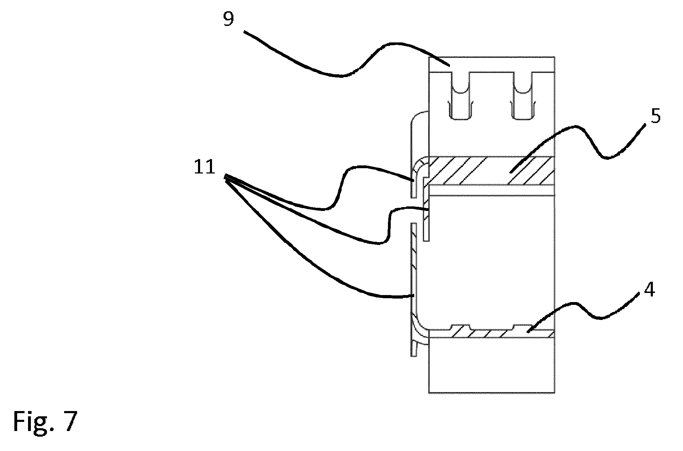

Die Staffelung und die Überlappung der plattenförmigen Lamellen 11 ist insbesondere auch der Figur 7 entnehmbar, die den Schnitt VII-VII aus Figur 6 zeigt.

In den in den Figuren gezeigten Ausführungsformen des Greifers 1 ist jedoch diejenige Öffnung 10 nicht verdeckt, die dem Bedienpersonal während des Einsatzes des Greifers 1 abgewandt ist. Damit kann in die verdeckte Öffnung 10 die Betätigungseinheit auch erst nach der generativen Fertigung der übrigen Bestandteile des Greifers 1 eingesetzt und ggf. verschraubt werden.

### Bezugszeichenliste

- 1: Greifer
- 2: Seitenflanke
- 3: Seitenflanke
- 4: Grundplatte
- 5: Tragplatte
- 6: Betätigungsmittel
- 7: Zylinderstange
- 8: Spannbacke
- 9: freies Ende
- 10: Öffnung
- 11: Lamelle
- 12: Delle
- 13: Querstange
- 14: Gitterzelle
- 15: Kontaktpunkt

## Patentansprüche

1. Greifer mit zwei Seitenflanken (2, 3), die einenends mittelbar oder unmittelbar miteinander verbunden sind und zwischen sich einen ein Betätigungsmittel (6) beinhaltenden Raum aufspannen, dessen seitliche Begrenzungen zumindest eine von außen zugängliche Öffnung (10) aufweisen, **dadurch gekennzeichnet, dass** mindestens eine über die Öffnung (10) verlaufende Lamelle (11) die Öffnung (10) derart unterteilt, dass die sich durch die Lamelle (11) ergebenden Teilflächen die Zugänglichkeit einschränken oder unterbinden.

2. Greifer nach Anspruch 1, **dadurch gekennzeichnet, dass** zwischen den Seitenflanken (2, 3) mit Abstand zu deren freien Enden (9) eine das Betätigungsmittel (6) tragende Tragplatte (5) vorgesehen ist.

3. Greifer nach Anspruch 1 oder 2, **dadurch gekennzeichnet, dass** die mindestens eine Lamelle (11) quer zur Richtung ihrer Längserstreckung ausgebildet mindestens eine Delle (12) aufweist.

4. Greifer nach Anspruch 3, **dadurch gekennzeichnet, dass** die mindestens eine Lamelle (11) eine Wellenform besitzt.

5. Greifer nach einem der Ansprüche 1 bis 4, **dadurch gekennzeichnet, dass** mehrere der Lamellen (11) die Öffnung (10) überbrücken und miteinander durch Querstege (13) zur Bildung einer Gitterstruktur vernetzt sind.

6. Greifer nach Anspruch 5, **dadurch gekennzeichnet, dass** die Größe der Gitterzellen (14) der Gitterstruktur zur Verhinderung des Durchsteckens eines erwachsenen Menschenfingers gewählt ist.

7. Greifer nach Anspruch 5 oder 6, **dadurch gekennzeichnet, dass** die Gitterzellen (14) der Gitterstrukur elastisch deformierbar sind.

8. Greifer nach Anspruch 1 oder 2, **dadurch gekennzeichnet, dass** die mindestens eine Lamelle (11) plattenförmig gebildet ist.

9. Greifer nach Anspruch 8, **dadurch gekennzeichnet, dass** die mindestens eine Lamelle (11) mehrfach vorgesehen ist und die einzelnen Lamellen (11) zumindest teilweise gestaffelt angeordnet sind.

10. Verfahren zur Herstellung eines Greifers nach den Ansprüchen 1 bis 9, **dadurch gekennzeichnet, dass** die Seitenflanken (2, 3) in einem generativen Fertigungsschritt einstückig mit der mindestens einen Lamelle (11) hergestellt werden.
